(19) Europäisches Patentamt
European Patent Office
Office européen des brevets

(11) EP 2 784 555 B1

(12) **EUROPEAN PATENT SPECIFICATION**

(45) Date of publication and mention of the grant of the patent:
**17.01.2018 Bulletin 2018/03**

(21) Application number: **13826347.0**

(22) Date of filing: **24.07.2013**

(51) Int Cl.:
*G02B 5/30* (2006.01) *B29C 55/08* (2006.01)
*B29L 7/00* (2006.01) *B29L 11/00* (2006.01)

(86) International application number:
**PCT/JP2013/069986**

(87) International publication number:
**WO 2014/021151 (06.02.2014 Gazette 2014/06)**

(54) **METHOD FOR MANUFACTURING PHASE DIFFERENCE FILM**

VERFAHREN ZUR HERSTELLUNG EINER PHASENDIFFERENZFOLIE

PROCÉDÉ DE FABRICATION D'UN FILM À DIFFÉRENCE DE PHASE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.07.2012 JP 2012169736**

(43) Date of publication of application:
**01.10.2014 Bulletin 2014/40**

(73) Proprietor: **Nitto Denko Corporation**
**Ibaraki-shi, Osaka 567-8680 (JP)**

(72) Inventors:
- **IIDA, Toshiyuki**
**Ibaraki-shi, Osaka 567-8680 (JP)**
- **SHIMIZU, Takashi**
**Ibaraki-shi, Osaka 567-8680 (JP)**
- **MURAKAMI, Nao**
**Ibaraki-shi, Osaka 567-8680 (JP)**
- **UWADA, Kazuki**
**Ibaraki-shi, Osaka 567-8680 (JP)**
- **KOJIMA, Tadashi**
**Ibaraki-shi, Osaka 567-8680 (JP)**

(74) Representative: **Hoffmann Eitle**
**Patent- und Rechtsanwälte PartmbB**
**Arabellastraße 30**
**81925 München (DE)**

(56) References cited:
**WO-A1-2012/077663 JP-A- 2000 009 935**
**US-A1- 2007 281 112**

- **MASAYUKI YAMAGUCHI ET AL: "Material design of retardation films with extraordinary wavelength dispersion of orientation birefringence: a review", CELLULOSE, KLUWER ACADEMIC PUBLISHERS (DORDRECHT), NL, vol. 19, no. 3, 4 February 2012 (2012-02-04), pages 601-613, XP035046955, ISSN: 1572-882X, DOI: 10.1007/S10570-012-9660-1**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 784 555 B1

## Description

### Technical Field

The present invention relates to a method of producing a retardation film.

### Background Art

In recent years, a display mounted with an organic EL panel has been proposed in association with widespread use of a thin display. The organic EL panel is liable to cause problems such as ambient light reflection and glare of a background because the panel includes a metal layer having high reflectivity. In view of the foregoing, it has been known that those problems are prevented by providing a circularly polarizing plate on a viewer side (for example, Patent Literature 1).

By the way, a retardation of a retardation film to be used in the circularly polarizing plate typically shows different retardation values depending on wavelengths. Accordingly, at some wavelengths, a sufficient antireflection effect is not obtained and decoloring becomes a problem. In view of the foregoing, the so-called reverse dispersion retardation film whose retardation value enlarges with increasing wavelength has been proposed (for example, Patent Literature 2). However, a material to be used in the reverse dispersion retardation film typically has lower stretching alignment property than that of a normal dispersion or flat dispersion material, and hence involves a problem in that it is difficult to obtain a desired retardation. For example, an attempt has been made to stretch the film at an additionally low temperature and a high ratio to improve the alignment property. Under such conditions, however, there arises a problem in that an excessive stress is applied to the film to rupture the film.

### Citation List

### Patent Literature

[PTL 1] JP 2005-189645 A
[PTL 2] JP 2006-171235 A

### Summary of Invention

### Technical Problem

The present invention has been made to solve the conventional problems, and a main object of the present invention is to provide a method of producing a retardation film excellent in stretchability and capable of achieving high alignment property.

### Solution to Problem

The inventors of the present invention have made extensive studies on a relationship between stretchability and the alignment property of a retardation film to be obtained, and as a result, have found that the object can be achieved by controlling a stretching temperature while paying attention to a distortion (stretching ratio)-stretching stress characteristic. Thus, the inventors have completed the present invention.

A method of producing a retardation film of the present invention is the method in which a lengthy resin film is stretched in a widthwise direction thereof while being conveyed in a lengthwise direction thereof to provide a retardation film satisfying a relationship of 0.70<Re (450) /Re (550) <0. 97, including: a preheating step of heating the resin film to a temperature T1; a preliminary stretching step of stretching the resin film after the preheating while cooling the film to a temperature T2; and a main stretching step, and the stretching ratio S1 in the preliminary step is more than 1.05 times and less than 2.0 times with respect to the original length of the resin film. In a preferred embodiment, the main stretching is continuously performed after the preliminary stretching.

In a preferred embodiment, a difference (T1-T2) between the temperature T1 and the temperature T2 is 5°C or more.

In a preferred embodiment, the temperature T1 is higher than a glass transition temperature (Tg) of the resin film by 5°C or more.

In a preferred embodiment, the retardation film satisfies a relationship of $1.5\times10^{-3}<\Delta n<6.0\times10$.

Advantageous Effects of Invention

According to one embodiment of the present invention, preliminary stretching in which the resin film heated to the temperature T1 is stretched in the widthwise direction while being cooled to the temperature T2 is performed, whereby the resin film can be stretched while a stretching stress is continuously increased. Specifically, the stretching can be performed without the occurrence of such a yield point that the stretching stress abruptly increases with a distortion (stretching ratio), and after providing the maximum stretching stress, the stretching stress reduces. Thus, the stretching can be satisfactorily advanced until desired alignment property is obtained.

Brief Description of Drawings

FIG. **1** is a schematic view illustrating an example of a method of producing a retardation film of the present invention.
FIG. **2(a)** is a schematic sectional view of a polarizing plate according to a preferred embodiment of the present invention and FIG. **2(b)** is a schematic sectional view of a polarizing plate according to another preferred embodiment of the present invention.

Description of Embodiments

Hereinafter, preferred embodiments of the present invention are described, but the present invention is not limited to these embodiments.

(Definitions of terms and symbols)

The definitions of terms and symbols used herein are as described below.

(1) Refractive index (nx, ny, nz)

"nx" refers to a refractive index in a direction providing a maximum in-plane refractive index (that is, slow axis direction), "ny" refers to a refractive index in a direction perpendicular to the slow axis in the plane (that is fast axis direction), and "nz" refers to a refractive index in a thickness direction.

(2) In-plane retardation (Re)

"Re (550) " refers to the in-plane retardation of a film measured with light having a wavelength of 550 nm at 23°C. When the thickness of the film is defined as d (nm), Re (550) is determined by the equation: $Re=(nx-ny)\times d$. It should be noted that "Re(450)" refers to the in-plane retardation of a film measured with light having a wavelength of 450 nm at 23°C.

(3) Thickness direction retardation (Rth)

"Rth (550) " refers to the thickness direction retardation of a film measured with light having a wavelength of 550 nm at 23°C. When the thickness of the film is defined as d (nm), Rth(550) is determined by the equation: $Rth=(nx-nz)\times d$. It should be noted that "Rth(450)" refers to the thickness direction retardation of a film measured with light having a wavelength of 450 nm at 23°C.

(4) Alignment property ($\Delta n$)

$\Delta n$ is determined by nx-ny.

A. Production method

A method of producing a retardation film of the present invention is a method in which a lengthy resin film is stretched in its widthwise direction while being conveyed in its lengthwise direction to provide a retardation film, the method including: a preheating step of heating the resin film to a temperature T1; a preliminary stretching step of stretching the resin film after the preheating while cooling the film to a temperature T2; and a main stretching step.

A-1. Preheating step

In the preheating step, the resin film is heated to the temperature T1 (°C). The temperature T1 is preferably equal to or higher than the glass transition temperature (Tg) of the resin film, more preferably equal to or higher than Tg+2°C, still more preferably equal to or higher than Tg+5°C. Meanwhile, the heating temperature T1 is preferably equal to or lower than Tg+40°C, more preferably equal to or lower than Tg+30°C. The temperature T1 is, for example, 110°C to 190°C, preferably 120°C to 180°C, though the temperature varies depending on the resin film to be used.
A time period required for increase of the temperature of the film to the temperature T1 varies depending on production conditions (such as the conveying speed of the resin film), and is not particularly limited.

A-2. Preliminary stretching step

In the preliminary stretching step, the resin film heated to the temperature T1 is stretched in the widthwise direction while being cooled to the temperature T2. According to such preliminary stretching, the resin film can be stretched while a stretching stress is continuously increased. Specifically, the stretching can be performed without the occurrence of such a yield point that the stretching stress abruptly increases with a distortion (stretching ratio), and after providing the maximum stretching stress, the stretching stress reduces. Thus, the stretching can be satisfactorily advanced until desired alignment property is obtained.
A difference (T1-T2) between the temperature T1 and the temperature T2 is preferably 2°C or more, more preferably 5°C or more. The temperature T2 is preferably Tg-20°C to Tg+30°C where Tg represents the glass transition temperature of the resin film, more preferably Tg-10°C to Tg+20°C, still more preferably Tg-5°C to Tg+10°C, particularly preferably about Tg. The temperature T2 is, for example, 90°C to 180°C, preferably 100°C to 170°C, though the temperature varies depending on the resin film to be used.
A time period required for cooling of the film from the temperature T1 to the temperature T2 varies depending on the production conditions (such as the conveying speed of the resin film), and is not particularly limited.
As described above, the stretching of the resin film is performed by stretching the lengthy resin film in the widthwise direction while conveying the film in the lengthwise direction. The widthwise direction of the resin film is preferably a direction (TD) perpendicular to the conveying direction (MD). The direction (TD) perpendicular to the conveying direction can comprehend directions at 85° to 95° counterclockwise with respect to the lengthwise direction of the resin film. It should be noted that the term "perpendicular" as used herein comprehends the case where the directions are substantially perpendicular to each other. Herein, the phrase "substantially perpendicular" comprehends the case where an angle between the directions is 90°±5.0°, and the angle is preferably 90°±3.0°, more preferably 90°±1.0°.
Any appropriate method may be adopted as a method of stretching the resin film. Specifically, fixed-end stretching may be adopted or free-end stretching may be adopted. In the preliminary stretching step, the stretching of the resin film may be performed in one stage or may be performed in a plurality of stages. When the stretching is performed in a plurality of stages, a stretching ratio to be described later is the final stretching ratio.
A stretching ratio S1 in the preliminary stretching step is preferably more than 1.05 times and less than 2.0 times, more preferably more than 1.05 times and 1.70 times or less with respect to the original length of the resin film.

A-3. Main stretching step

In the main stretching step, the resin film subjected to the preliminary stretching is further stretched in the widthwise direction. The main stretching, which may be continuously performed or may be intermittently performed after the preliminary stretching, is preferably continuously performed. A stretching temperature in the main stretching preferably falls within the range of Tg-20°C to Tg+30°C where Tg represents the glass transition temperature of the resin film, more preferably falls within the range of Tg-10°C to Tg+20°C, and is particularly preferably about Tg. The stretching temperature in the main stretching is, for example, 90°C to 180°C, preferably 100°C to 170°C, though the temperature varies depending on the resin film to be used. In a preferred embodiment, the stretching temperature in the main stretching and the temperature T2 are substantially the same.
A stretching ratio S2 in the main stretching step is preferably 1.5 times or more, more preferably 2.0 times or more with respect to the original length of the resin film. Meanwhile, the stretching ratio S2 is typically less than 5.0 times with respect to the original length of the resin film.

A-4. Other step

The method of producing a retardation film of the present invention can include any other step except the foregoing. The other step is, for example, the step of cooling the resin film after the stretching.
FIG. **1** is a schematic view illustrating an example of the method of producing a retardation film of the present

invention. In the illustrated example, a lengthy resin film **31** is conveyed in its lengthwise direction in a tenter stretching machine **1** provided with a preheating zone **2,** a preliminary stretching zone **3,** a main stretching zone **4,** and a cooling zone **5** in the stated order from its inlet side.

The lengthy resin film **31** wound in a roll shape in advance is wound off, and then widthwise direction end portions **31a, 31a** of the resin film **31** are held with holding means (clips) **6, 6.** The resin film **31** held with the left and right clips **6, 6** is conveyed at a predetermined speed and passed through the preheating zone **2,** and then the resin film **31** is heated to the temperature T1. Any appropriate means may be adopted as means for heating the film to the temperature T1. Examples thereof include heating apparatus such as a hot air heater, a panel heater, and a halogen heater. Of those, a hot air heater is preferably used.

Next, in the preliminary stretching zone **3,** the resin film **31** is stretched in its widthwise direction (at the stretching ratio S1) while being cooled to the temperature T2. Specifically, the clips **6, 6** holding the end portions **31a, 31a** are moved outward with respect to the widthwise direction while the resin film **31** is conveyed at a predetermined speed. In addition, the resin film **31** is cooled to the temperature T2 by setting the preset temperature of a heating apparatus in the preliminary stretching zone **3** to a predetermined temperature. After the preliminary stretching, the resin film **31** is further continuously stretched in the widthwise direction (at the stretching ratio S2) in the main stretching zone **4.** The same heating means as that of the preheating zone **2** may be adopted as the heating means of the main stretching zone **4.** After the stretching, in the cooling zone **5,** the resin film **31** is cooled to room temperature to provide a retardation film **30.** It should be noted that the respective zones substantially mean zones where the resin film is preheated, subjected to the preliminary stretching, subjected to the main stretching, and cooled, and do not mean zones mechanically or structurally independent of one another.

A-5. Resin film

The lengthy resin film is formed of any appropriate resin as long as the stretching treatment of the film provides a retardation film that shows the so-called reverse wavelength dispersion dependency. Examples of the resin for forming the resin film include a polycarbonate resin, a polyvinyl acetal resin, a cellulose ester-based resin, and a cycloolefin-based resin. Preferred examples thereof include a polycarbonate resin and a polyvinyl acetal resin. The resins for forming the resin film may be used alone or in combination depending on desired characteristics.

In one embodiment, the polycarbonate resin contains a dihydroxy compound having a fluorene structure (fluorene-based dihydroxy compound) . Of such compounds, a compound represented by the following formula (1) having a 9,9-diphenylfluorene structure is preferred from the viewpoints of the heat resistance or mechanical strength of the polycarbonate resin to be obtained, optical characteristics, or polymerization reactivity.

[Chem. 1]

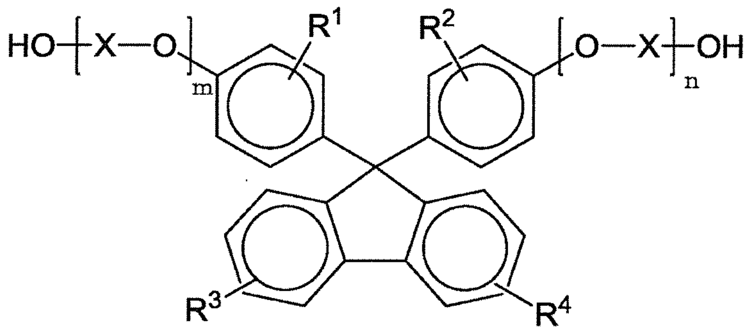

(1)

In the general formula (1), $R^1$ to $R^4$ each independently represent a hydrogen atom, a substituted or unsubstituted alkyl group having 1 carbon atom to 20 carbon atoms, a substituted or unsubstituted cycloalkyl group having 6 carbon atoms to 20 carbon atoms, or a substituted or unsubstituted aryl group having 6 carbon atoms to 20 carbon atoms, and represent identical or different groups as four substituents in the respective benzene rings. X represents a substituted or unsubstituted alkylene group having 2 carbon atoms to 10 carbon atoms, a substituted or unsubstituted cycloalkylene group having 6 carbon atoms to 20 carbon atoms, or a substituted or unsubstituted arylene group having 6 carbon atoms to 20 carbon atoms. m and n each independently represent an integer of 0 to 5.

$R^1$ to $R^4$ each independently represent preferably a hydrogen atom or an alkyl group unsubstituted or substituted with an ester group, an ether group, a carboxylic acid, an amido group, or a halogen and having 1 to 6 carbon atoms, more preferably a hydrogen atom or an alkyl group having 1 to 6 carbon atoms. X represents preferably an alkylene group unsubstituted or substituted with an ester group, an ether group, a carboxylic acid, an amido group, or a halogen and having 2 carbon atoms to 10 carbon atoms, a cycloalkylene group unsubstituted or substituted with an ester group, an ether group, a carboxylic acid, an amido group, or a halogen and having 6 carbon atoms to 20 carbon atoms, or an arylene group unsubstituted or substituted with an ester group, an ether group, a carboxylic acid, an amido group, or a halogen and having 6 carbon atoms to 20 carbon atoms, more preferably an alkylene group having 2 to 6 carbon atoms . In addition, m and n each independently represent preferably an integer of 0 to 2. Of those, 0 or 1 is preferred.

Specific examples thereof include

9,9-bis[4-(2-hydroxyethoxy)phenyl]fluorene,
9,9-bis(4-hydroxyphenyl)fluorene,
9,9-bis(4-hydroxy-2-methylphenyl)fluorene,
9,9-bis(4-hydroxy-3-methylphenyl)fluorene,
9,9-bis[4-(2-hydroxypropoxy)phenyl]fluorene,
9,9-bis[4-(2-hydroxyethoxy)phenyl]fluorene,
9,9-bis[4-(2-hydroxyethoxy)-3-methylphenyl]fluorene,
9,9-bis[4-(2-hydroxypropoxy)-3-methylphenyl]fluorene,
9,9-bis[4-(2-hydroxyethoxy)-3-isopropylphenyl]fluorene,
9,9-bis[4-(2-hydroxyethoxy)-3-isobutylphenyl]fluorene,
9,9-bis[4-(2-hydroxyethoxy)-3-tert-butylphenyl]fluorene,
9,9-bis[4-(2-hydroxyethoxy)-3-cyclohexylphenyl]fluorene,
9,9-bis[4-(2-hydroxyethoxy)-3-phenylphenyl]fluorene,
9,9-bis[4-(2-hydroxyethoxy)-3,5-dimethylphenyl]fluorene,
9,9-bis[4-(2-hydroxyethoxy)-3-tert-butyl-6-methylphenyl]fluore ne, and
9,9-bis[4-(3-hydroxy-2,2-dimethylpropoxy)phenyl]fluorene.

Of those, 9,9-bis(4-hydroxy-3-methylphenyl)fluorene, 9,9-bis(4-(2-hydroxyethoxy)phenyl)fluorene, and 9,9-bis(4-(2-hydroxyethoxy)-3-methylphenyl)fluorene are preferred from the viewpoints of the expression of optical performance, handling property, easy availability, and the like. When heat resistance is required, it is preferred to use 9,9-bis(4-hydroxy-3-methylphenyl)fluorene. When the toughness of the film is required, it is preferred to use 9,9-bis(4-(2-hydroxyethoxy)phenyl)fluorene.

The polycarbonate resin is preferably a resin obtained by using the fluorene-based dihydroxy compound having a structural unit represented by the general formula (1) as a raw material monomer at 10 mol% or more with respect to all dihydroxy compounds, and the usage is more preferably 20 mol% or more, particularly preferably 25 mol% or more. In addition, the usage is preferably 90 mol% or less, more preferably 70 mol% or less, particularly preferably 50 mol% or less. When the usage of the monomer having the structural unit is excessively small, there is a risk that the resultant polycarbonate resin does not show desired optical performance. In addition, when the usage is excessively large, the melt viscosity of the resultant polycarbonate resin tends to be excessively high to reduce its productivity or formability.

The polycarbonate resin preferably contains a structural unit derived from a dihydroxy compound except the fluorene-based dihydroxy compound (hereinafter sometimes referred to as "other dihydroxy compound") in order that its optical physical properties may be regulated to desired ones.

Examples of the other dihydroxy compound include a dihydroxy compound of a linear aliphatic hydrocarbon, a dihydroxy compound of a linear and branched aliphatic hydrocarbon, a dihydroxy compound of an alicyclic hydrocarbon, and an aromatic bisphenol.

Examples of the dihydroxy compound of a linear aliphatic hydrocarbon include ethylene glycol, 1,3-propanediol, 1,2-propanediol, 1,4-butanediol, 1,3-butanediol, 1,2-butanediol, 1,5-heptanediol, 1,6-hexanediol, 1,10-decanediol, and 1,12-dodecanediol. In particular, a dihyroxy compound of a linear aliphatic hydrocarbon having 3 to 6 carbon atoms and having hydroxy groups at both of its terminals such as 1,3-propanediol, 1,4-butanediol, 1,5-heptanediol, or 1,6-hexanediol is preferred.

Examples of the dihydroxy compound of a linear and branched aliphatic hydrocarbon may include neopentyl glycol and 2-ethylhexylene glycol.

Examples of the dihydroxy compound of an alicyclic hydrocarbon include dihydroxy compounds derived from 1,2-cyclohexanediol, 1,2-cyclohexanedimethanol, 1,3-cyclohexanedimethanol, 1,4-cyclohexanedimethanol, tricyclodecanedimethanol, pentacyclopentadecanedimethanol, 2,6-decalindimethanol, 1,5-decalindimethanol, 2,3-decalindimethanol, 2,3-norbornanedimethanol, 2,5-norbornanedimethanol, 1,3-adamantanedimethanol, and terpene compounds such as limonene. In particular, 1,2-cyclohexanedimethanol, 1,3-cyclohexanedimethanol, 1,4-cyclohexanedimethanol, or tricyclodecanedimethanol is preferred, and a dihydroxy compound having a cyclohexane structure such as 1,2-cyclohexanedimethanol, 1,3-cyclohexanedimethanol, or 1,4-cyclohexanedimethanol is more preferred.

Examples of the aromatic bisphenol include 2,2-bis(4-hydroxyphenyl)propane, 2,2-bis(4-hydroxy-3,5-dimethylphenyl)propane, 2,2-bis(4-hydroxy-3,5-diethylphenyl)propane, 2,2-bis(4-hydroxy-(3,5-diphenyl)phenyl)propane, 2,2-bis(4-hydroxy-3,5-bibromophenyl)propane, 2,2-bis(4-hydroxyphenyl)pentane, 2,4'-dihydroxy-diphenylmethane, bis(4-hydroxyphenyl)methane, bis(4-hydroxy-5-nitrophenyl)methane, 1,1-bis(4-hydroxyphenyl)ethane, 3,3-bis(4-hydroxyphenyl)pentane, 1,1-bis(4-hydroxyphenyl)cyclohexane, bis(4-hydroxyphenyl) sulfone, 2,4'-dihydroxydiphenyl sulfone, bis(4-hydroxyphenyl) sulfide, 4,4'-dihydroxydiphenyl ether, and 4,4'-dihydroxy-3,3'-dicyclodiphenyl ether. Of those, 2,2-bis(4-hydroxyphenyl)propane (= bisphenol A) is preferred from the viewpoints of easy availability and the impartation of heat resistance.

At least one kind of dihydroxy compound having a moiety represented by the following formula (2) in part of its structure is preferably used as the other dihydroxy compound from the viewpoint of imparting, for example, an optical characteristic such as a moderate birefringence or a low photoelastic coefficient, toughness, a mechanical strength, or adhesion to a retardation film to be obtained.

[Chem. 2]

$$-(-CH_2-O-)- \qquad (2)$$

Specific examples thereof include an oxyalkylene glycol, a dihydroxy compound having an ether group bonded to an aromatic group in its main chain, and a dihydroxy compound having an cyclic ether structure.

Examples of the oxyalkylene glycol include diethylene glycol, triethylene glycol, tetraethylene glycol, polyethylene glycol, and polypropylene glycol. Of those, polyethylene glycol having a number-average molecular weight of 150 to 2,000 is preferred.

Examples of the dihydroxy compound having an ether group bonded to an aromatic group in its main chain include 2,2-bis[4-(2-hydroxyethoxy)phenyl]propane, 2,2-bis[4-(2-hydroxypropoxy)phenyl]propane, 1,3-bis(2-hydroxyethoxy)benzene, 4,4'-bis(2-hydroxyethoxy)biphenyl, and bis[4-(2-hydroxyethoxy)phenyl] sulfone.

Examples of the dihydroxy compound having an cyclic ether structure include dihydroxy compounds represented by the following formulae (3) to (5).

It should be noted that the "cyclic ether structure" in the "dihydroxy compound having an cyclic ether structure" means a cyclic structure having an ether group therein and an aliphatic carbon as a carbon forming its cyclic chain.

[Chem. 3]

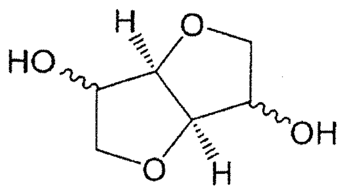

(3)

[Chem. 4]

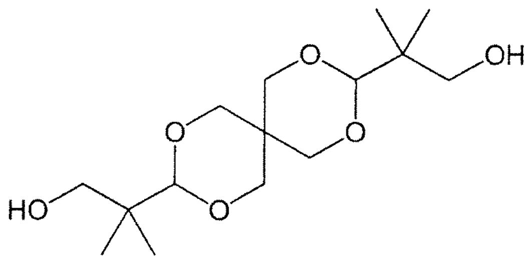

(4)

[Chem. 5]

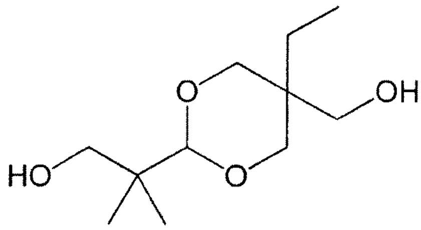

(5)

Examples of the dihydroxy compound represented by the formula (3) include isosorbide, isomannide, and isoidide that are in a stereoisomeric relationship. One kind of those compounds may be used alone, or two or more kinds thereof may be used in combination.

Of those dihydroxy compounds each having a cyclic ether structure, a dihydroxy compound having two cyclic ether structures such as the dihydroxy compound represented by the formula (3) or spiroglycol represented by the formula (4) is more preferred from the viewpoint of imparting heat resistance.

When the dihydroxy compounds represented by the formulae (3), (4), and/or (5) are used as raw material monomers, the compounds are preferably used at 10 mol% or more with respect to all dihydroxy compounds, and the usage is more preferably 30 mol% or more, particularly preferably 40 mol% or more. In addition, an upper limit for the usage is preferably 90 mol% or less, more preferably 80 mol% or less, particularly preferably 60 mol% or less. When the usage of the dihydroxy compounds is excessively small or excessively large, there is a risk that the resultant polycarbonate resin does not show desired optical performance.

One kind of the other dihydroxy compounds alone, or a combination of two or more kinds thereof may be used in combination with the fluorene-based dihydroxy compound depending on performance that a polycarbonate resin to be obtained is required to have. In particular, in order that a polycarbonate resin that expresses desired optical performance, can be stably produced, and has a characteristic commensurate with the retardation film may be obtained, two or more kinds of the other dihydroxy compounds as well as the fluorene-based dihydroxy compound are preferably copolymerized.

The polycarbonate resin can be obtained by causing the fluorene-based dihydroxy compound and the other dihydroxy compound to be used as required, and phosgene to react with one another. The resin can be preferably obtained by: blowing phosgene into a solution formed of an alkaline solution of those dihydroxy compounds and methylene chloride to provide an oligomer; then increasing its molecular weight to a predetermined value as required with a catalyst such as triethylamine or a terminal stopper such as a monohydroxy compound; and then isolating a polycarbonate resin dissolved in a methylene chloride phase. In addition, as another method, the resin can be obtained by subjecting the dihydroxy compounds and a carbonic acid diester as raw materials to polycondensation based on an ester exchange reaction.

Examples of the carbonic acid diester to be used typically include carbonic acid diesters represented by the following formula (6). One kind of those carbonic acid diesters may be used alone, or two or more kinds thereof may be used as a mixture.

[Chem. 6]

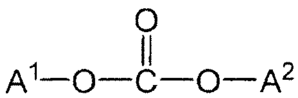

(6)

In the formula (6), $A^1$ and $A^2$ each represent a substituted or unsubstituted aliphatic hydrocarbon group having 1 to 18 carbon atoms, or a substituted or unsubstituted aromatic hydrocarbon group, and $A^1$ and $A^2$ may be identical to or different from each other. $A^1$ and $A^2$ each represent preferably a substituted or unsubstituted aromatic hydrocarbon group, more preferably an unsubstituted aromatic hydrocarbon group.

Examples of the carbonic acid diesters represented by the formula (6) include diphenyl carbonate (DPC), a substituted diphenyl carbonate such as ditolyl carbonate, dimethyl carbonate, diethyl carbonate, and di-t-butyl carbonate. Of those, diphenyl carbonate or a substituted diphenyl carbonate is preferred. In addition, diphenyl carbonate is particularly preferred.

It should be noted that the carbonic acid diester contains an impurity such as a chloride ion in some cases, and hence may inhibit a polymerization reaction or deteriorate the hue of a polycarbonate resin to be obtained. Accordingly, the carbonic acid diester is preferably purified by distillation or the like as required before use.

In addition, part of the carbonic acid diester may be substituted with a dicarboxylic acid or an ester thereof (hereinafter referred to as "dicarboxylic acid compound"). Examples of such dicarboxylic acid compound include: dicarboxylic acids such as terephthalic acid, isophthalic acid, oxalic acid, succinic acid, and 1,4-cyclohexanedicarboxylic acid; and methyl esters thereof; and phenyl esters thereof. When part of the carbonic acid diester is substituted with the dicarboxylic acid compound, the polycarbonate resin is sometimes referred to as "polyester carbonate resin." The content of a structural unit derived from the dicarboxylic acid compound in the polycarbonate resin to be used in the present invention is preferably 45 mol% or less, more preferably 40 mol% or less out of the structural units derived from all dihydroxy compounds and all dicarboxylic acid compounds. When the content of the dicarboxylic acid compound is more than 45 mol%, polymerizability may reduce to prevent the polymerization from proceeding to such an extent that a desired molecular weight is obtained.

The glass transition temperature of the polycarbonate resin is preferably 110°C or more and 150°C or less, more preferably 120°C or more and 140°C or less. When the glass transition temperature is excessively low, its heat resistance tends to deteriorate, and hence there is a risk that the resin causes a dimensional change after having been formed into a film. In addition, the image quality of an organic EL panel to be obtained may be reduced. When the glass transition temperature is excessively high, forming stability at the time of the film forming may deteriorate. In addition, the transparency of the film may be impaired. It should be noted that the glass transition temperature is determined in conformity with JIS K 7121 (1987).

The molecular weight of the polycarbonate resin can be represented as a reduced viscosity. The reduced viscosity is measured as follows: methylene chloride is used as a solvent, a polycarbonate concentration is precisely adjusted to 0.6 g/dL, and measurement is performed at a temperature of 20.0°C±0.1°C with an Ubbelohde viscosity tube. In ordinary cases, a lower limit for the reduced viscosity is preferably 0.30 dL/g, more preferably 0.35 dL/g or more. In ordinary cases, an upper limit for the reduced viscosity is preferably 1.20 dL/g, more preferably 1.00 dL/g, still more preferably 0.80 dL/g. When the reduced viscosity is smaller than the lower limit value, a problem in that the mechanical strength of a formed article reduces may arise. On the other hand, when the reduced viscosity is larger than the upper limit value, a problem in that flowability upon forming reduces, and hence the productivity or the formability reduces may arise.

A specific example of the polycarbonate resin and a detailed production method therefor according to another preferred embodiment are disclosed in, for example, JP 4739571 B2, WO 2008/156186 A1, JP 2010-134232 A, JP 2003-45080 A, and JP 2005-263885 A.

Any appropriate polyvinyl acetal resin may be used as the polyvinyl acetal resin. Typically, the polyvinyl acetal resin can be obtained by subjecting at least two kinds of aldehyde compounds and/or ketone compounds and a polyvinyl alcohol-based resin to a condensation reaction.

Examples of the aldehyde compound include formaldehyde, acetaldehyde, 1,1-diethoxyethane (acetal), propionaldehyde, n-butyraldehyde, isobutyraldehyde, cyclohexanecarboxaldehyde, 5-norbornene-2-carboxaldehyde, 3-cyclohexene-1-carboxaldehyde, dimethyl-3-cyclohexene-1-carboxaldehyde, benzaldehyde, 2-chlorobenzaldehyde, p-dimethylaminobenzaldehyde, t-butylbenzaldehyde, 3,4-dimethoxybenzaldehyde, 2-nitrobenzaldehyde, 4-cyanobenzaldehyde, 4-carboxybenzaldehyde, 4-phenylbenzaldehyde, 4-fluorobenzaldehyde, 2-(trifluoromethyl)benzaldehyde, 1-naphthaldehyde, 2-naphthaldehyde, 2-methoxy-1-naphthaldehyde, 2-ethoxy-1-naphthaldehyde, 2-propoxy-1-naphthaldehyde, 2-methyl-1-naphthaldehyde, 2-hydroxy-1-naphthaldehyde, 6-methoxy-2-naphthaldehyde, 3-methyl-2-thiophenecarboxaldehyde, 2-pyridinecarboxaldehyde, and indole-3-carboxaldehyde.

Examples of the ketone compound include acetone, ethyl methyl ketone, diethyl ketone, t-butyl ketone, dipropyl ketone, allyl ethyl ketone, acetophenone, p-methylacetophenone, 4'-aminoacetophenone, p-chloroacetophenone, 4'-methoxyacetophenone, 2'-hydroxyacetophenone, 3'-nitroacetophenone, P-(1-piperidino)acetophenone, benzalacetophenone, propiophenone, benzophenone, 4-nitrobenzophenone, 2-methylbenzophenone, p-bromobenzophenone, cyclohexyl(phenyl)methanone, 2-butyronaphthone, 1-acetonaphthone, 2-hydroxy-1-acetonaphthone, and 8'-hydroxy-1'-benzonaphthone.

Those aldehyde compounds and ketone compounds may be used alone or in combination. When the aldehyde compounds and/or ketone compounds are used in combination, the kinds, numbers, numbers of moles, and the like of the compounds to be used may be appropriately set depending on purposes.

Any appropriate polyvinyl alcohol-based resin may be adopted as the polyvinyl alcohol-based resin depending on purposes. The polyvinyl alcohol-based resin may be a linear polymer or a branched polymer. In addition, the polyvinyl alcohol-based resin may be a homopolymer or a copolymer obtained by subjecting two or more kinds of unit monomers to polymerization. When the polyvinyl alcohol-based resin is a copolymer, the sequence order of basic units may be alternate, random, or block. A typical example of the copolymer is an ethylene-vinyl alcohol copolymer. The polyvinyl alcohol-based resin can be obtained by, for example, the following procedures. A vinyl ester-based monomer is subjected

to polymerization, thereby obtaining a vinyl ester-based polymer. After that, the polymer is subjected to saponification to turn the vinyl ester unit into a vinyl alcohol unit. Examples of the vinyl ester-based monomer include vinyl formate, vinyl acetate, vinyl propionate, vinyl valerate, vinyl laurate, vinyl stearate, vinyl benzoate, vinyl pivalate, and vinyl versatate. Of those vinyl ester-based monomers, vinyl acetate is particularly preferred.

The glass transition temperature of the polyvinyl acetal resin is preferably 90°C to 190°C, more preferably 100°C to 170°C, particularly preferably 110°C to 150°C.

A more specific example of the polyvinyl acetal resin and a detailed production method therefor are disclosed in, for example, JP 2007-161994 A.

Any appropriate method may be adopted as a method of forming the resin film. Examples thereof include a melt extrusion method (such as a T die molding method), a cast coating method (such as a flow casting method), a calendar molding method, a hot press method, a coextrusion method, a comelting method, multilayer extrusion, and an inflation molding method. Of those, a T die molding method, a flow casting method, and an inflation molding method are preferably used.

The thickness of the resin film (unstretched film) may be set to any appropriate value depending on, for example, desired optical characteristics and a stretching condition. The thickness is preferably 50 μm to 300 μm.

B. Retardation film

A retardation film produced by the method of the present invention is produced by the production method and shows the so-called reverse wavelength dispersion dependency. Specifically, its in-plane retardations satisfy a relationship of $Re(450)<Re(550)$. The in-plane retardations preferably satisfy a relationship of $0.70<Re(450)/Re(550)<0.97$ and more preferably satisfy a relationship of $0.80<Re(450)/Re(550)<0.95$.

As described above, its refractive index characteristics show a relationship of nx>ny. The alignment property Δn of the retardation film preferably shows a relationship of $1.5\times10^{-3}<\Delta n<6.0\times10^{-3}$ and more preferably shows a relationship of $1.5\times10^{-3}<\Delta n<4.0\times10^{-3}$.

The retardation film shows any appropriate refractive index ellipsoid as long as the film has the relationship of nx>ny. The refractive index ellipsoid of the retardation film preferably shows a relationship of nx>ny≥nz.

The thickness of the retardation film (stretched film) is preferably 20 μm to 100 μm, more preferably 30 μm to 80 μm, still more preferably 30 μm to 65 μm.

C. Polarizing plate

A polarizing plate includes a polarizer and the retardation film, and the retardation film is laminated on one side of the polarizer. In one embodiment, the polarizing plate does not include an optically anisotropic layer (such as a liquid crystal layer or another retardation film) between the polarizer and the retardation film. Hereinafter, a specific example thereof is described.

FIG. **2(a)** is a schematic sectional view of the polarizing plate according to a preferred embodiment of the present invention. A polarizing plate **100** according to this embodiment includes a polarizer **10,** a protective film **20** placed on one side of the polarizer **10,** and a retardation film **30** placed on the other side of the polarizer **10.** In this embodiment, the retardation film **30** can function as a protective layer for the polarizer **10** as well.

FIG. **2(b)** is a schematic sectional view of the polarizing plate according to another preferred embodiment of the present invention. A polarizing plate **100'** includes the polarizer **10,** a first protective film **21** placed on one side of the polarizer **10,** the retardation film **30** placed on the other side of the polarizer **10,** and a second protective film **22** placed between the polarizer **10** and the retardation film **30.** It is preferred that the second protective film **22** be optically isotropic.

The refractive index characteristics of the retardation film **30** show a relationship of nx>ny and the film has a slow axis. The polarizer **10** and the retardation film **30** are laminated so that the absorption axis of the polarizer **10** and the slow axis of the retardation film **30** may form a predetermined angle depending on purposes. For example, when the retardation film **30** can function as the so-called λ/4 plate, the angle formed between the absorption axis of the polarizer **10** and the slow axis of the retardation film **30** is preferably 30° to 60°, more preferably 35° to 55°, still more preferably 40° to 50°, particularly preferably 43° to 47°, most preferably about 45°.

The entire thickness of the polarizing plate is typically about 50 μm to 250 μm, though the thickness varies depending on its construction.

C-1. Polarizer

Any appropriate polarizer may be adopted as the polarizer. Specific examples thereof include: a film prepared by subjecting a hydrophilic polymer film such as a polyvinyl alcohol-based film, a partially formalized polyvinyl alcohol-based film, or an ethylene/vinyl acetate copolymer-based partially saponified film to dyeing treatment with a dichromatic substance such as iodine or a dichromatic dye and stretching treatment; and a polyene-based orientated film such as a dehydrated product of polyvinyl alcohol or a dechlorinated product of a polyvinyl chloride. Of those, a polarizer prepared by dyeing a polyvinyl alcohol-based film with iodine and uniaxially stretching the film is preferably used because of its excellent optical characteristics.

The dyeing with iodine is performed by, for example, immersing the polyvinyl alcohol-based film in an aqueous solution of iodine. The stretching ratio of the uniaxial stretching is preferably 3 to 7 times. The stretching may be performed after the dyeing treatment or may be performed while the dyeing is performed. Alternatively, the stretching may be performed before the dyeing. The polyvinyl alcohol-based film is subjected to, for example, swelling treatment, cross-linking treatment, washing treatment, or drying treatment as required. For example, when the polyvinyl alcohol-based film is washed with water by being immersed in water before the dyeing, the dirt or antiblocking agent on the surface of the polyvinyl alcohol-based film can be washed. In addition, the polyvinyl alcohol-based film can be swollen to prevent dyeing unevenness or the like.

The thickness of the polarizer is typically about 1 $\mu$m to 80 $\mu$m.

C-2. Protective film

The protective film is formed of any appropriate film that may be used as a protective layer for the polarizer. As specific examples of a material to be used as a main component of the film, there are given transparent resins such as a cellulose-based resin including triacetylcellulose (TAC), a polyester-based resin, a polyvinyl alcohol-based resin, a polycarbonate-based resin, a polyamide-based resin, a polyimide-based resin, a polyether sulfone-based resin, a polysulfone-based resin, a polystyrene-based resin, a polynorbornene-based resin, a polyolefin-based resin, a (meth)acrylic resin, and an acetate-based resin. There are also given an (meth)acrylic, urethane-based, (meth)acrylic urethane-based, epoxy-based, or silicone-based thermosetting resin or UV-curing resin. In addition to the foregoing, there is given a glassy polymer such as a siloxane-based polymer. In addition, a polymer film described in JP 2001-343529 A (WO 01/37007 A1) may also be used. As a material for the film, there may be used a resin composition containing a thermoplastic resin having a substituted or unsubstituted imide group in its side chain, and a thermoplastic resin having a substituted or unsubstituted phenyl group and a nitrile group in its side chain. A specific example thereof is a resin composition containing an alternate copolymer of isobutene and N-methylmaleimide, and an acrylonitrile/styrene copolymer. The polymer film may be, for example, an extruded product of the resin composition.

The Tg (glass transition temperature) of the (meth)acrylic resin is preferably 115°C or more, more preferably 120°C or more, still more preferably 125°C or more, particularly preferably 130°C or more. This is because excellent durability can be provided. The upper limit value of the Tg of the (meth) acrylic resin is not particularly limited, but is preferably 170°C or less from the viewpoint of formability or the like.

Any appropriate (meth)acrylic resin may be adopted as the (meth) acrylic resin as long as the effect of the present invention is not impaired. Examples thereof include a poly (meth) acrylic acid ester such as polymethyl methacrylate, a methyl methacrylate-(meth)acrylic acid copolymer, a methyl methacrylate-(meth)acrylic acid ester copolymer, a methyl methacrylate-acrylic acid ester-(meth)acrylic acid copolymer, a methyl (meth)acrylate-styrene copolymer (e.g., an MS resin), and a polymer having an alicyclic hydrocarbon group (e.g., a methyl methacrylate-cyclohexyl methacrylate copolymer or a methyl methacrylate-norbornyl (meth)acrylate copolymer). The (meth) acrylic resin is preferably poly ($C_{1-6}$ alkyl (meth) acrylate), such as polymethyl (meth)acrylate, more preferably a methyl methacrylate-based resin containing as a main component methyl methacrylate (50 to 100 wt%, preferably 70 to 100 wt%).

Specific examples of the (meth)acrylic resin include ACRYPET VH and ACRYPET VRL20A manufactured by Mitsubishi Rayon Co. , Ltd., a (meth)acrylic resin having a ring system in its molecule described in JP 2004-70296 A, and a (meth)acrylic resin having a high Tg obtained through intramolecular cross-linking or intramolecular cyclization reactions.

The (meth)acrylic resin is particularly preferably a (meth) acrylic resin having a lactone ring system in view of having high heat resistance, high transparency, and high mechanical strength.

Examples of the (meth)acrylic resin having a lactone ring system include (meth) acrylic resins each having a lactone ring system described, for example, in JP 2000-230016 A, JP 2001-151814 A, JP 2002-120326 A, JP 2002-254544 A, and JP 2005-146084 A.

The mass-average molecular weight (sometimes referred to as "weight-average molecular weight") of the (meth) acrylic resin having a lactone ring system is preferably 1, 000 to 2, 000, 000, more preferably 5,000 to 1,000,000, still more preferably 10,000 to 500,000, particularly preferably 50,000 to 500,000.

The Tg (glass transition temperature) of the (meth) acrylic resin having a lactone ring system is preferably 115°C or more, more preferably 125°C or more, still more preferably 130°C or more, particularly preferably 135°C or more, most preferably 140 °C or more. There is because excellent durability can be provided. The upper limit value of the Tg of the (meth)acrylic resin having a lactone ring system is not particularly limited, but is preferably 170°C or less

from the viewpoint of formability or the like.

It should be noted that the term" (meth) acrylic" as used herein refers to "acrylic" and/or "methacrylic".

The protective film **20** (or the first protective film **21)** to be placed on a side opposite to the retardation film with respect to the polarizer may be subjected to surface treatment such as hard coat treatment, antireflection treatment, antisticking treatment, or antiglare treatment as required. The thickness of the protective film (or the first protective film) is typically 5 mm or less, preferably 1 mm or less, more preferably 1 μm to 500 μm, still more preferably 5 μm to 150 μm.

As described above, it is preferred that the second protective film **22** placed between the polarizer **10** and the retardation film **30** be optically isotropic. The phrase "optically isotropic" as used herein means that the in-plane retardation Re(550) is 0 nm to 10 nm and a thickness direction retardation Rth(550) is -10 nm to +10 nm. In addition, the optically anisotropic layer refers to, for example, a layer whose in-plane retardation Re (550) is more than 10 nm and/or whose thickness direction retardation Rth(550) is less than -10 nm or more than 10 nm.

The thickness of the second protective film is preferably 5 μm to 200 μm, more preferably 10 μm to 100 μm, still more preferably 15 μm to 95 μm.

C-3. Others

Any appropriate pressure-sensitive adhesive layer or adhesive layer is used in the lamination of the respective layers constituting the polarizing plate. The pressure-sensitive adhesive layer is typically formed of an acrylic pressure-sensitive adhesive. The adhesive layer is typically formed of a polyvinyl alcohol-based adhesive.

Although not shown, a pressure-sensitive adhesive layer may be formed on the polarizing plate **100, 100'** side of the retardation film **30.** The formation of the pressure-sensitive adhesive layer in advance can facilitate the attachment of the plate to any other optical member (such as an organic EL panel). It should be noted that a release film is preferably attached to the surface of the pressure-sensitive adhesive layer until the layer is used.

Examples

Hereinafter, the present invention is specifically described by way of Examples. However, the present invention is not limited to Examples below. It should be noted that methods of measuring characteristics are as described below.

(1) Thickness

Measurement was performed with a dial gauge (manufactured by PEACOCK, product name "DG-205", a dial gauge stand (product name "pds-2")).

(2) Retardation

Measurement was performed with an Axoscan manufactured by Axometrics. Measurement wavelengths were 450 nm and 550 nm, and a measurement temperature was 23°C. It should be noted that a film piece measuring 50 mm by 50 mm cut out of a retardation film was used as a measurement sample.

(3) Alignment angle

A measurement sample was placed parallel to the measuring table of an Axoscan manufactured by Axometrics and then the alignment angle of a retardation film was measured. It should be noted that a film piece measuring 50 mm by 50 mm cut out of the retardation film was used as the measurement sample. At that time, the film piece was cut out so that one side thereof was parallel to the lengthwise direction of the lengthy retardation film.

(Example 1)

(Production of polycarbonate resin film)

44.8 Parts by mass of isosorbide (ISB), 85.8 parts by mass of 9,9-[4-(2-hydroxyethoxy)phenyl]fluorene (BHEPF), 5.9 parts by mass of polyethylene glycol having a number-average molecular weight of 400 (PEG #400), 112.3 parts by mass of diphenyl carbonate (DPC), and 0.631 part by mass of cesium carbonate (0.2 mass% aqueous solution) as a catalyst were loaded into a reaction vessel. Under a nitrogen atmosphere, as a first-stage step of a reaction, the temperature of a heating medium in the reaction vessel was set to 150°C and then the raw materials were dissolved (for about 15 minutes) while being stirred as required.

Next, a pressure in the reaction vessel was changed from normal pressure to 13.3 kPa, and then produced

phenol was extracted to the outside of the reaction vessel while the temperature of the heating medium in the reaction vessel was increased to 190°C within 1 hour.

The temperature in the reaction vessel was held at 190 °C for 15 minutes. After that, as a second-stage step, the pressure in the reaction vessel was set to 6.67 kPa, the temperature of the heating medium in the reaction vessel was increased to 230°C within 15 minutes, and produced phenol was extracted to the outside of the reaction vessel. When the stirring torque of a stirring machine started to increase, the temperature was increased to 250°C within 8 minutes, and the pressure in the reaction vessel was reduced to 0.200 kPa or less in order that produced phenol was removed. After the stirring torque had reached a predetermined value, the reaction was terminated and then the produced reaction product was extruded in water, followed by pelletization. Thus, a polycarbonate resin containing BHEPF, ISB, and the PEG #400 at 37.8 mol%, 59.3 mol%, and 2.9 mol%, respectively was obtained.

The resultant polycarbonate resin had a glass transition temperature of 130°C and a reduced viscosity of 0.363 dL/g.

The resultant polycarbonate resin was vacuum-dried at 80°C for 5 hours, and then a polycarbonate resin film having a thickness of 155 μm was produced from the resin with a film-producing apparatus provided with a uniaxial extruder (manufactured by Isuzu Kakoki Co. , Ltd., screw diameter: 25 mm, cylinder preset temperature: 220°C), a T-die (width: 200 mm, preset temperature: 220°C), a chill roll (preset temperature: 120 to 130°C), and a winding machine.

(Production of retardation film)

As illustrated in FIG. **1,** the resultant polycarbonate resin film was stretched in its widthwise direction with a tenter stretching machine to provide a retardation film having a thickness of 62 μm. At that time, the temperature T1 was set to 140°C, the temperature T2 was set to 130°C, the stretching temperature in the main stretching was set to 130°C, the stretching ratio S1 was set to 1.6 times, and the stretching ratio S2 was set to 2.5 times.

Table 1 shows the optical characteristics of the resultant retardation film. It should be noted that a wavelength dispersion characteristic in the table shows a value for Re(450)/Re(550).

(Example 2)

(Production of polycarbonate resin film)

85.12 Parts of 3,9-bis(2-hydroxy-1,1-dimethylethyl)-2,4,8,10-tetraoxaspiro[5. 5]undecane (spiroglycol), 45.36 parts of 9,9-bis(4-hydroxy-3-methylphenyl)fluorene (BCF), 89.29 parts of diphenyl carbonate, and $1.8\times10^{-2}$ part of tetramethylammonium hydroxide and $1.6\times10^{-4}$ part of sodium hydroxide as catalysts were heated to 180°C under a nitrogen atmosphere to be melted. After that, a pressure reduction degree was adjusted to 13.4 kPa over 30 minutes. After that, the temperature was increased to 260°C at a rate of 20°C/hr and then held at the temperature for 10 minutes. After that, the pressure reduction degree was set to 133 Pa or less over 1 hour. A reaction was performed under stirring for a total of 6 hours. After the completion of the reaction, tetrabutylphosphonium dodecylbenzenesulfonate was added in a molar amount 4 times as large as the catalyst amount to deactivate the catalysts. After that, the resultant was ejected from the bottom of a reaction tank under nitrogen pressurization, and was then cut with a pelletizer while being cooled in a water tank. Thus, a pellet was obtained.

The resultant pellet had a viscosity-average molecular weight of 19,000 and its composition determined by proton NMR was as follows : the pellet contained BCF and SPG at 30 mol% and 70 mol%, respectively. In addition, the pellet had a glass transition temperature of 133°C. It should be noted that the viscosity-average molecular weight was determined by substituting the specific viscosity ($\eta_{sp}$) of a solution, which was obtained by dissolving 0.7 g of the polycarbonate resin in 100 mL of methylene chloride, measured at 20°C into the following equation.

$$\eta_{sp}/c=[\eta]+0.45\times[\eta]2c$$

(where [η] represents a limiting viscosity.)

$$[\eta]=1.23\times10^{-4}\times(Mv)^{0.83}$$

c=0.7

The resultant polycarbonate resin was dissolved in methylene chloride to produce a dope having a solid content concentration of 19 wt%. A cast film (having a thickness of 110 μm) was produced from the dope solution by a known

method. The resultant film had a viscosity-average molecular weight of 19, 000, and hence there was no difference in viscosity-average molecular weight between the pellet and the film.

(Production of retardation film)

As illustrated in FIG. **1,** the resultant polycarbonate resin film was stretched in its widthwise direction with a tenter stretching machine to provide a retardation film having a thickness of 46 μm. At that time, the temperature T1 was set to 143°C, the temperature T2 was set to 133 °C, the stretching temperature in the main stretching was set to 133°C, the stretching ratio S1 was set to 1.4 times, and the stretching ratio S2 was set to 2.4 times.
Table 1 shows the optical characteristics of the resultant retardation film.

(Example 3)

(Production of polycarbonate resin film)

A pellet was obtained in the same manner as in Example 2 except that 66.88 parts of spiroglycol, 78.83 parts of 9,9-bis[4-(2-hydroxyethoxy)phenyl]fluorene (BPEF), and 89.29 parts of diphenyl carbonate were used.
The resultant pellet had a viscosity-average molecular weight of 17,700 and its composition determined by proton NMR was as follows : the pellet contained BPEF and SPG at 45 mol% and 55 mol%, respectively. In addition, the pellet had a glass transition temperature of 125°C.
The resultant polycarbonate resin was vacuum-dried at 80°C for 5 hours, and then a polycarbonate resin film having a thickness of 220 μm was produced from the resin with a film-producing apparatus provided with a uniaxial extruder (manufactured by Isuzu Kakoki Co. , Ltd. , screw diameter: 25 mm, cylinder preset temperature: 220°C), a T-die (width: 200 mm, preset temperature: 220°C), a chill roll (preset temperature: 120 to 130°C), and a winding machine.

(Production of retardation film)

As illustrated in FIG. **1,** the resultant polycarbonate resin film was stretched in its widthwise direction with a tenter stretching machine to provide a retardation film having a thickness of 92 μm. At that time, the temperature T1 was set to 135°C, the temperature T2 was set to 125°C, the stretching temperature in the main stretching was set to 125°C, the stretching ratio S1 was set to 1.5 times, and the stretching ratio S2 was set to 2.4 times.
Table 1 shows the optical characteristics of the resultant retardation film.

(Example 4)

(Production of polyvinyl acetal resin film)

8.8 Grams of a polyvinyl alcohol-based resin (manufactured by The Nippon Synthetic Chemical Industry Co., Ltd., trade name: "NH-18" (polymerization degree=1,800, saponification degree=99.0%)) were dried at 105 °C for 2 hours, and were then dissolved in 167.2 g of dimethyl sulfoxide (DMSO). 2.98 Grams of 2-methoxy-1-naphthaldehyde and 0.80 g of p-toluenesulfonic acid monohydrate were added to the solution, followed by stirring at 40 °C for 1 hour. 3.18 Grams of benzaldehyde were added to the reaction solution, followed by stirring at 40°C for 1 hour. After that, 4.57 g of dimethyl acetal were further added to the resultant, followed by stirring at 40°C for 3 hours. After that, 2.13 g of triethylamine were added to terminate the reaction. The resultant crude product was recrystallized with 1 L of methanol. The filtered polymer was dissolved in tetrahydrofuran and then recrystallized with methanol again. The resultant was filtered and dried to provide 11.9 g of a white polymer.
$^1$H-NMR measurement showed that the resultant polymer had a repeating unit represented by the following formula (XI) and a ratio (molar ratio) 1:m:n:o was 10:25:52:11. In addition, the glass transition temperature of the polymer measured with a differential scanning calorimeter was 130°C.

[Chem. 7]

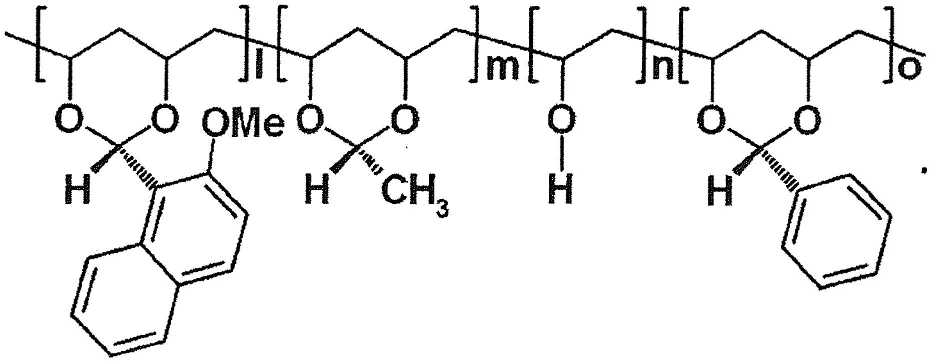

... (X I)

The resultant polymer was dissolved in methyl ethyl ketone (MEK), and then the solution was applied onto a polyethylene terephthalate film (having a thickness of 70 μm) with an applicator and dried with an air circulation-type drying oven. After that, the dried product was peeled from the polyethylene terephthalate film. Thus, a film having a thickness of 150 μm was produced.

(Production of retardation film)

As illustrated in FIG. **1,** the resultant polyvinyl acetal resin film was stretched in its widthwise direction with a tenter stretching machine to provide a retardation film having a thickness of 60 μm. At that time, the temperature T1 was set to 140°C, the temperature T2 was set to 130°C, the stretching temperature in the main stretching was set to 130°C, the stretching ratio S1 was set to 1.5 times, and the stretching ratio S2 was set to 2.5 times.

Table 1 shows the optical characteristics of the resultant retardation film.

(Comparative Example 1)

(Production of retardation film)

An attempt was made to produce a retardation film in the same manner as in Example 1 except that the resin film was not heated to the temperature T1.

The resin film could not be stretched at a stretching ratio up to 2.5 times and ruptured.

(Comparative Example 2)

(Production of retardation film)

The polycarbonate resin film obtained in Example 1 was heated to 130°C. After that, the film was stretched in its widthwise direction at 1.5 times while being further heated to 150 °C at maximum. Further, the film was stretched at up to 2.7 times at 150°C to provide a retardation film having a thickness of 42 μm.

Table 1 shows the optical characteristics of the resultant retardation film.

(Comparative Example 3)

(Production of retardation film)

An attempt was made to produce a retardation film as follows. The polycarbonate resin film obtained in Example 1 was heated to 140°C. After that, the film was stretched in its widthwise direction while being cooled to 130°C.

The resin film could not be stretched at a stretching ratio up to 2.5 times and ruptured.

(Comparative Example 4)

(Production of retardation film)

An attempt was made to produce a retardation film in the same manner as in Example 4 except that the resin film was not heated to the temperature T1.
The resin film could not be stretched at a stretching ratio up to 2.5 times and ruptured.

(Reference Example 1)

(Production of retardation film)

As illustrated in FIG. **1,** a norbornene-based resin film (manufactured by JSR Corporation, product name "ARTON", glass transition temperature 145°C) having a thickness of 65 μm was stretched in its widthwise direction with a tenter stretching machine to provide a retardation film having a thickness of 26 μm. At that time, the temperature T1 was set to 155°C, the temperature T2 was set to 145°C, the stretching temperature in the main stretching was set to 145°C, the stretching ratio S1 was set to 1.6 times, and the stretching ratio S2 was set to 2.5 times.
Table 1 shows the optical characteristics of the resultant retardation film.

[Table 1]

| | Resin film | Tg ((°C) | Preliminary stretching | | | Main stretching | | $\Delta n \times 10^{-3}$ | Wavelength dispersion characteristic |
|---|---|---|---|---|---|---|---|---|---|
| | | | T1 | T2 | S1 | Stretching temperature | S2 | | |
| | | | (°C) | (°C) | (Times) | (°C) | (Times) | | |
| Example 1 | Polycarbonate 1 | 130 | 140 | 130 | 1.6 | 130 | 2.5 | 2.26 | 0.927 |
| Example 2 | Polycarbonate 2 | 133 | 143 | 133 | 1.4 | 133 | 2.4 | 3.06 | 0.906 |
| Example 3 | Polycarbonate 3 | 125 | 135 | 125 | 1.5 | 125 | 2.4 | 1.54 | 0.880 |
| Example 4 | Polyvinyl acetal | 130 | 140 | 130 | 1.5 | 130 | 2.5 | 2.30 | 0.890 |
| Comparative Example 1 | Polycarbonate 1 | 130 | - | - | - | 130 | 2.5 | - | - |
| Comparative Example 2 | Polycarbonate 1 | 130 | 130 | 150 | 1.5 | 150 | 2.7 | 1.16 | 0.927 |
| Comparative Example 3 | Polycarbonate 1 | 130 | 140 | 130 | 2.5 | - | - | - | - |
| Comparative Example 4 | Polyvinyl acetal | 130 | - | - | - | 130 | 2.5 | - | - |
| Reference Example 1 | Norbornene | 145 | 155 | 145 | 1.6 | 145 | 2.5 | 5.32 | 1.000 |

Industrial Applicability

The retardation film produced by the method of the present invention is suitably used for a display apparatus such as an organic EL device and a liquid crystal display apparatus.

Reference Signs List

| | |
|---|---|
| **1** | tenter stretching machine |
| **2** | preheating zone |
| **3** | preliminary stretching zone |
| **4** | main stretching zone |
| **5** | cooling zone |
| **6** | clip |
| **10** | polarizer |
| **20** | protective film |
| **21** | first protective film |
| **22** | second protective film |
| **30** | retardation film |
| **31** | resin film |
| **100** | polarizing plate |
| **100'** | polarizing plate |

## Claims

1. A method of producing a retardation film in which a lengthy resin film is stretched in a widthwise direction thereof while being conveyed in a lengthwise direction thereof to provide a retardation film satisfying a relationship of 0.70<Re(450)/Re(550)<0.97, the method comprising:

    a preheating step of heating the resin film to a temperature T1;
    a preliminary stretching step of stretching the resin film after the preheating while cooling the film from the temperature T1 to a temperature T2; and
    a main stretching step of stretching the resin film after the preliminary stretching at the temperature T2,

    where Re(450) and Re(550) each represent an in-plane retardation measured with light having a wavelength of 450 nm or 550 nm at 23°C, and
    a stretching ratio S1 in the preliminary stretching step is more than 1.05 times and less than 2.0 times with respect to an original length of the resin film.

2. A production method according to claim 1, wherein the main stretching is continuously performed after the preliminary stretching.

3. A production method according to claim 1, wherein a difference (T1-T2) between the temperature T1 and the temperature T2 is 5°C or more.

4. A production method according to claim 1, wherein the temperature T1 is higher than a glass transition temperature (Tg) of the resin film by 5°C or more.

5. A production method according to claim 1, wherein the retardation film satisfies a relationship of $1.5\times10^{-3}<\Delta n<6.0\times10^{-3}$ where $\Delta n$ represents alignment property (nx-ny) measured with light having a wavelength of 550 nm at 23°C.

## Patentansprüche

1. Verfahren zur Herstellung einer Verzögerungsfolie, bei dem eine langgestreckte Harzfolie in einer Breitenrichtung

derselben gestreckt wird, während sie in einer Längsrichtung derselben gefördert wird, um eine Verzögerungsfolie bereitzustellen, die die Beziehung 0,70 < Re(450)/Re(550) < 0,97 erfüllt, das Verfahren umfassend:

einen Vorwärmschritt, bei dem die Harzfolie auf eine Temperatur T1 erwärmt wird;
einen Vorstreckschritt, bei dem die Harzfolie nach dem Vorwärmen, während die Folie von der Temperatur T1 auf eine Temperatur T2 abgekühlt wird, gestreckt wird; und
einen Hauptstreckschritt, bei dem die Harzfolie nach dem Vorstrecken bei der Temperatur T2 gestreckt wird,
wobei Re(450) und Re(550) jeweils für eine Verzögerung in der Ebene stehen, gemessen mit Licht einer Wellenlänge von 450 nm oder 550 nm bei 23°C, und
das Streckverhältnis S1 im Vorstreckschritt mehr als das 1,05-fache und weniger als das 2,0-fache in Bezug auf die ursprüngliche Länge der Harzfolie beträgt.

**2.** Herstellungsverfahren gemäß Anspruch 1, wobei das Hauptstrecken kontinuierlich nach dem Vorstrecken erfolgt.

**3.** Herstellungsverfahren gemäß Anspruch 1, wobei die Differenz (T1-T2) zwischen der Temperatur T1 und der Temperatur T2 5°C oder mehr beträgt.

**4.** Herstellungsverfahren gemäß Anspruch 1, wobei die Temperatur T1 5°C oder mehr über der Glasübergangstemperatur (Tg) der Harzfolie liegt.

**5.** Herstellungsverfahren gemäß Anspruch 1, wobei die Verzögerungsfolie die Beziehung $1{,}5 \times 10^{-3} < \Delta n < 6{,}0 \times 10^{-3}$ erfüllt, wobei $\Delta n$ für die Ausrichtungseigenschaft (nx-ny) steht, die mit Licht einer Wellenlänge von 550 nm bei 23°C gemessen wird.

## Revendications

**1.** Procédé de fabrication d'un film retardateur dans lequel un film en résine s'étendant en direction longitudinale est étiré dans une direction en largeur de ce dernier tout en étant transporté dans une direction longitudinale de ce dernier afin d'obtenir un film retardateur répondant à une équation de 0,70<Re(450) / Re(550)<0,97, le procédé comprenant :

une étape de préchauffage à savoir le chauffage du film en résine jusqu'à une température T1 ;
une étape d'étirage préliminaire à savoir l'étirage du film en résine après le préchauffage tout en refroidissant le film à partir de la température T1 jusqu'à une température T2 ; et
une étape d'étirage principal à savoir l'étirage du film en résine après l'étirage préliminaire à la température T2 ;
dans lequel Re(450) et Re(550) représentent respectivement une mesure de retardement dans le plan mesurée avec une lumière possédant une longueur d'onde de 450 nm ou de 550 nm à 23 °C ; et
un rapport d'étirage S1 dans l'étape d'étirage préliminaire représente plus de 1,05 fois et moins de 2,0 fois une longueur initiale du film en résine.

**2.** Procédé de fabrication selon la revendication 1, dans lequel l'étirage principal est mis en oeuvre en continu après l'étirage préliminaire.

**3.** Procédé de fabrication selon la revendication 1, dans lequel une différence (T1-T2) entre la température T1 et la température T2 s'élève à 5 °C ou plus.

**4.** Procédé de fabrication selon la revendication 1, dans lequel la température T1 est supérieure à une température de transition vitreuse (Tg) du film en résine à raison de 5 °C ou plus.

**5.** Procédé de fabrication selon la revendication 1, dans lequel le film retardateur répond à une équation de $1{,}5\times10^{-3}<\Delta n<6{,}0\times10^{-3}$ où $\Delta n$ représente une propriété d'alignement (nx-ny) mesurée avec une lumière possédant une longueur d'onde de 550 nm à 23 °C.

Fig.1

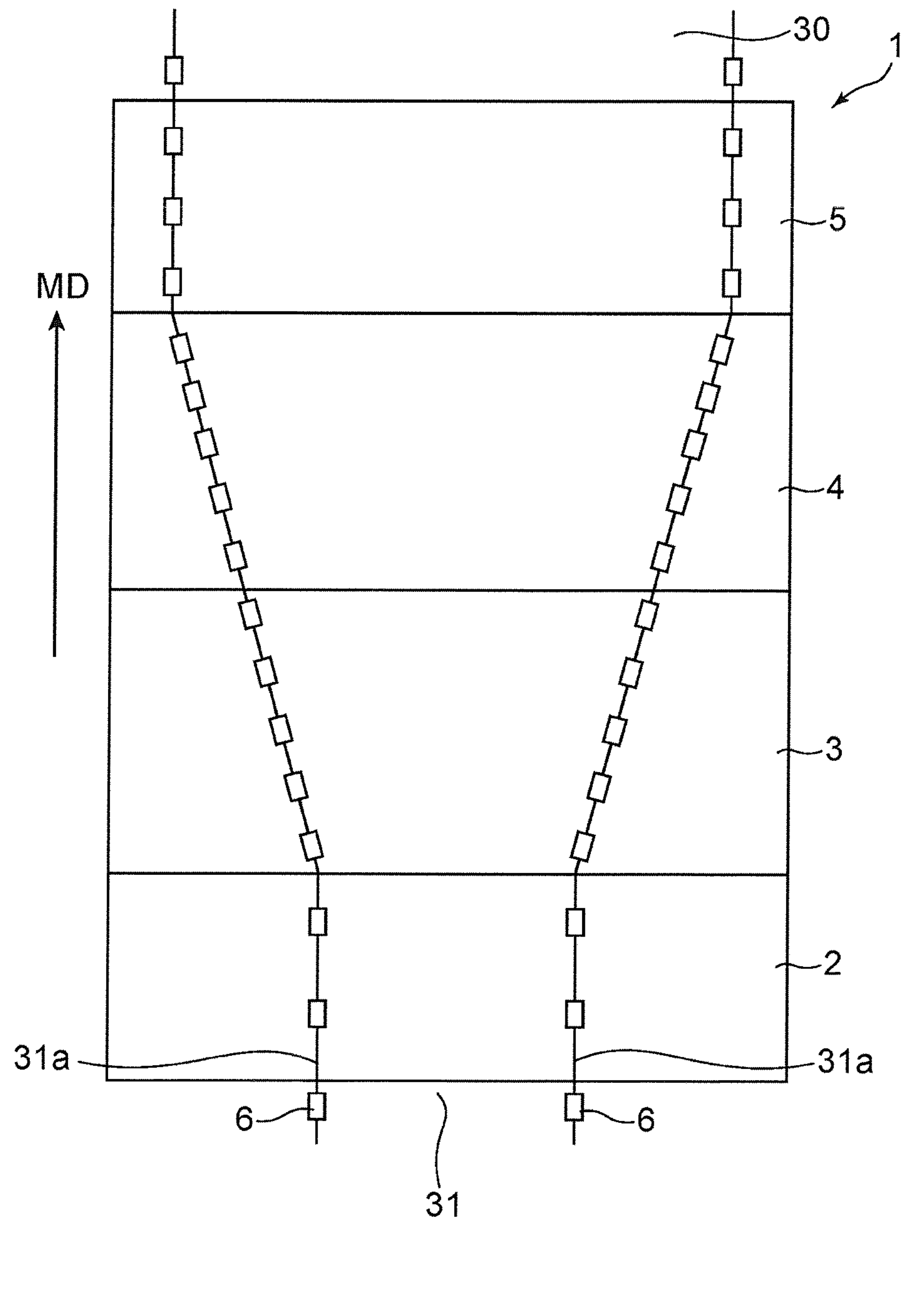

Fig.2

(a)

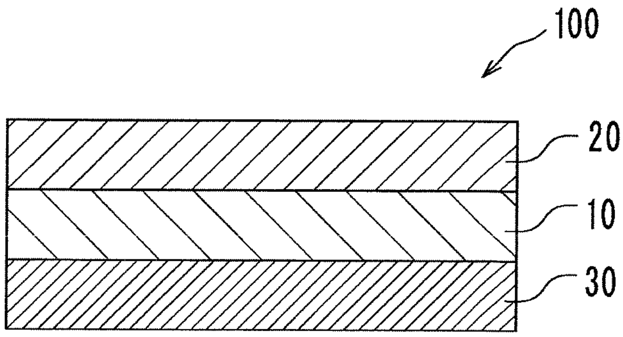


(b)

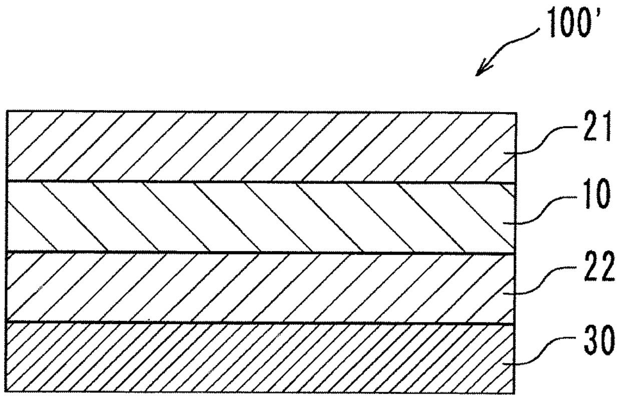

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2005189645 A
- JP 2006171235 A
- JP 4739571 B
- WO 2008156186 A1
- JP 2010134232 A
- JP 2003045080 A
- JP 2005263885 A
- JP 2007161994 A
- JP 2001343529 A
- WO 0137007 A1
- JP 2004070296 A
- JP 2000230016 A
- JP 2001151814 A
- JP 2002120326 A
- JP 2002254544 A
- JP 2005146084 A